# EUROPEAN PATENT SPECIFICATION

(11) **EP 1 660 413 B1**
(45) Date of publication and mention of the grant of the patent: **23.03.2011**
(21) Application number: 03817330.8
(22) Date of filing: 30.06.2003
(51) Int. Cl.: C03B 37/012

(54) **METHOD AND APPARATUS FOR DRILLING PREFORMS FOR HOLEY OPTICAL FIBERS**
VERFAHREN UND VORRICHTUNG ZUM BOHREN VON VORFORMEN FÜR LOCH-LICHTLEITFASERN
PROCEDE ET DISPOSITIF POUR PRODUIRE DES PREFORMES POUR FIBRES OPTIQUES TROUEES ET DES FIBRES

(43) Date of publication of application: 31.05.2006
(73) Proprietor: Prysmian S.p.A., 20126 Milano (IT)
(72) Inventor: DAI, Guojun, I-20126 Milano (IT); SOLINAS, Stefano, I-20126 Milano (IT); VERONELLI, Franco, I-20126 Milano (IT); ARIMONDI, Marco, I-20126 Milano (IT)
(74) Representative: Maccalli, Marco
(86) International application number: PCT/EP2003/007157
(87) International publication number: WO 2005/003046

(56) References cited:
- EP-A- 0 630 864
- EP-A- 1 234 806
- WO-A-01/38244
- WO-A-02/072489
- PATENT ABSTRACTS OF JAPAN vol. 2003, no. 02, 5 February 2003 (2003-02-05) -& JP 2002 293562 A (SUMITOMO ELECTRIC IND LTD;ALLIED MATERIAL CORP), 9 October 2002 (2002-10-09)

## Description

The present invention relates in general to the field of optical fiber manufacturing, and, more particularly, to the manufacturing of holey optical fibers.

Optical fibers are largely used in optical telecommunication systems. Conventional optical fibers have a solid core of relatively high refractive index, at an operating optical wavelength, surrounded by a solid cladding of relatively low refractive index. Light propagates along the fiber being substantially confined within the core, thanks to a mechanism known as Total Internal Reflection (TIR), which arises from the lower refractive index of the cladding compared to that of the core.

In recent years, a new class of optical fibers has been proposed and investigated. These new optical fibers have been generally referred to as holey fibers, because they contain a fine array of air-holes extending along the full fiber length. Holey fibers are sometimes also referred to as microstructured fibers, Photonic Crystal Fibers (PCFs), Photonic Band Gap (PBG) fibers, hole-assisted fibers.

Roughly speaking, two main types of holey fibers can be identified. A first type of holey fibers includes index-guided fibers, having a high refractive index core and a cladding made of a photonic crystal; in these fibers, the light is guided by TIR, similarly to conventional fibers. A second type of holey fibers includes PBG fibers, having a low refractive index core surrounded by a photonic crystal cladding; in these fibers, the light is guided by PBG effects.

Holey fibers have proven to feature unique optical properties, which are particularly useful in the field of optical telecommunications, and cannot be achieved by conventional fibers; examples of the peculiar properties of holey fibers are high nonlinearity, endless single-mode transmission, high numeric aperture.

Several methods have been so far proposed for fabricating holey fibers.

One of the most popular techniques for producing holey fibers, an embodiment of which is described for example in US 5,802,236, can be defined as "stack-and-draw". According to this technique, a large number of solid and hollow silica rods (silica capillary tubes) are stacked inside a hollow glass cylinder, in a close-packed space arrangement reproducing the arrangement of holes that is to be obtained in the final fiber. The stacked silica rods are then welded together, and the resulting optical fiber preform is fed to a conventional draw furnace and drawn by a conventional preform drawing method.

Although it has been reported that good-quality microstructured fibers have been produced in this way, the Applicant has observed that the stack-and-draw technique is actually affected by several drawbacks. For example, properly positioning and assembling a large number (up to hundreds) of very thin silica tubes is an awkward task.

Additionally, when using generically cylindrical tubes, the inevitable presence of interstitial spaces between the tubes introduces undesired interfaces and impurities, and induces a deformation of the holes due to the transport of mass from the tube toward the interstitial spaces; all this dramatically affects the attenuation of the final fiber.

Furthermore, optical fibers produced by means of this technique are hardly reproducible. Due to the difficulties in arranging the tubes close-packed together, it is almost impossible to produce holey fibers having arbitrary hole lattice structures.

Another known technique for producing microstructured fibers, described for example in EP 1 172 339 A1, makes use of a sol-gel process. A generically cylindrical mould is provided having a multiplicity of elongated elements extending therethrough; silica-containing sol is then introduced into the mould, and the sol is then caused to or permitted to gel. The resulting gel body is removed from the mould and the elongated elements are removed from the gel body (by mechanical extraction or, possibly, by chemical action or pyrolysis, depending on the nature of the elongate elements). The gel body is then dried and sintered. Finally, a microstructured fiber is obtained by drawing the sintered body.

Differently from the stack-and-draw technique, this sol-gel technique allows producing microstructured fibers with arbitrary arrangements of holes (i.e., with an arbitrary hole lattice structure); additionally, the sol-gel process is less affected by problems of reproducibility, and seems to be suitable for mass-scale production.

However, the Applicant has observed that optical fibers produced in this way might be affected by problems of relatively high losses, due to the inevitable presence of embedded water and impurities, as well as an irregular molecular microstructure. This drawbacks, together with the relatively high costs, may hinder the industrial application of this sol-gel technique.

Holey fibers may also be formed exploiting extrusion-based techniques, of the type described for example in US 5,774,779. However, these techniques, generally suitable only when polymeric materials and soft glasses (i.e., glasses having a low glass transition temperature) are involved, are disadvantageous for a number of reasons, including contamination, scarce reproducibility, high polarization mode dispersion, just to cite some.

Fabrication of holey fibers by drilling of the holes directly into solid glass rods has also been proposed.

For example, WO02/072489 mentions a method of fabricating holey fibers involving drilling of holes into solid glass rods of diameter around 30 mm using an ultra-sonic assisted mechanical drill. The resulting holey canes are afterwards milled on the outside in order to realize six flats, and then drawn into hexagonal capillary tubes. Finally, the hexagonal capillary tubes are stacked in a close-packed manner to produce a fiber preform that may be drawn into fiber. WO02/072489 criticizes this method in that ultra-sonic assisted mechanical drilling usually involves a large contamination of the preform material and a long manufacturing time.

It is observed that drilling and milling of glass rods has also been proposed in connection with the manufacturing of optical fibers different from holey fibers. For example, WO 01/38244 discloses a method of fabricating an optical fiber made with perturbations or irregularities at a cladding boundary, comprising drilling a plurality of holes within the cladding material formed by means of mechanical or ultra-sonic assisted mechanical milling of solid glass rods.

The Applicant has observed that the drawbacks of these techniques are such as to make their use impractical for industrial, large-scale production of holey fibers. In fact, due to the hardness of the glass, drilling holes therein is extremely time-consuming: several hours are necessary for making even a single hole. Clearly, as the number of holes to be made increases, the fiber manufacturing time really explodes.

Additionally, these methods do not guarantee precision of the holes when the hole diameter becomes small and the length increases.

Moreover, relatively high contamination of the fiber takes place during the drilling/milling of holes.

In WO 02/072489 a method of fabricating preforms for microstructured fibers is disclosed wherein laser ablation or laser etching is employed to form elongated channels (grooves and/or slits) in glass rods or tubes, which are then mounted in a predetermined arrangement for the formation of a microstructured fiber preform.

The Applicant observes that this technique may easily become extremely complex and tedious when preforms with a relatively complex cross-sectional design need to be prepared (*e.g*., preforms with more than a single ring of holes around the core).

Moreover, several sleeving steps are necessary in order to obtain a complex cross-sectional design, and the increase in the number of interfaces enhances the fiber attenuation.

At least for these reasons, this technique is still not suitable for large-scale production, being confined to laboratory-scale fabrication.

In EP 1234806 a plurality of through-holes are formed in a preform extending along the preform axis. Subsequently, the preform is heated in a furnace preferably while flowing a dry gas in the through-holes. Subsequently, the preform is drawn into an optical fiber.

In view of the state of the art outlined in the foregoing, the Applicant has realized that the known holey fiber production methods are not practical from the viewpoint of the industrial applicability, not being suitable, for different reasons, to the low-cost, mass-scale production of low-loss holey fibers.

Therefore, it has been an object of the present invention to provide a new method of producing holey optical fibers, that does not exhibit the problems of the known fabrication methods.

In particular, it has been an object of the present invention to provide a holey fiber production method suitable for producing low-losses optical fibers, possibly at low costs, which is reproducible and stable, and which is suitable for mass production.

Additionally, it has been an object of the present invention to provide a method such as to enable the realization, in an easy way, of precise structures of holes in the fibers.

With these and other objects in mind, the Applicant had the intuition that a good starting point in devising a new process for producing holey fibers might be the flame hydrolysis process (in jargon, soot process) widely adopted for producing conventional, i.e., non-holey, optical fibers, which has since long demonstrated to be an excellent technique in terms of both mass production and fiber performance. Flame hydrolysis processes include the vapor deposition processes known in the art.

The Applicant has realized that the holes can be formed rather easily by drilling the relatively soft glass soot bodies that are obtained from known soot processes, before submitting them to consolidation. This is much easier, much faster, and also better from the viewpoint of the results than drilling holes into a vitrified rod.

The Applicant has also realized that the same advantages may be obtained by applying the mechanical drilling technique to any other kind of porous preform suitable to be transformed into vitrified preforms, such as for example gel porous preforms.

According to a first aspect of the present invention, there is therefore provided a method of producing a holey optical fiber preform, comprising:
forming a porous preform having a longitudinal direction, and
forming a pattern of holes extending through the porous preform along the longitudinal direction thereof, wherein said holes are formed by drilling the porous preform.

It is pointed out that, for the purposes of the present invention, by "drilling" there is intended any kind of mechanical drilling known in the art, including ultrasonic drilling.

In order to ensure that the geometry of the holes is not altered during subsequent steps of the method, the density of the porous preform is "substantially constant" at least in a region thereof wherein the holes are to be formed. For the purposes of the present invention, the density is considered to be "substantially constant" in a predetermined region when the density maximum variation in that region is ± 2 %, more preferably ± 1 %, even more preferably ± 0.5 %. The possibility of achieving a ± 0.5 % change in bulk density in the radial direction is reported for example in JP. 4367536 A2

The method further comprises submitting the porous preform to a consolidation process after said drilling, thereby the density of the porous preform is increased. The porous preform is also submitted to a dehydration process after the drilling.

In an embodiment of the present invention, the porous preform is a soot preform formed by means flame hydrolysis, particularly adopting any suitable chemical vapor deposition process, even more particularly one of the well-established processes adopted for producing conventional, non-holey optical fibers, such as the Outside Vapor Deposition (OVD) process and the Vapor Axial Deposition (VAD) process.

Preferably, in order to avoid the risk of cracking during the drilling operation, the glass soot preform has a density (D) in a range from 0.25 to 0.8 g/cm³ and, even more preferably, in a range from 0.5 to 0.7 g/cm³.

Alternatively, the porous preform is a gel preform.

According to another aspect of the present invention, there is provided a method of producing a holey optical fiber having at least one hole extending through a fiber longitudinal direction. The method comprises forming a holey optical fiber preform by means of the method according to the first aspect of the invention, and drawing the holey optical fiber preform.

According to a third aspect of the present invention, there is provided a device for drilling holes in a porous optical fiber preform. The device comprises:
a porous preform supporting structure, comprising an arrangement of porous preform holders adapted to engage an outer surface of the porous preform for keeping the porous preform steady;
a drill for actuating at least one drilling bit, and
a position adjustment structure for adjusting a relative position of the porous preform and the drill.

Preferably, the porous preform holders have a surface, intended for contacting the porous preform, made of an elastomeric material, preferably rubber, particularly silicon rubber.

Preferably, the drilling device comprises a tilt mechanism adapted to tilting an axis of the porous preform supporting structure with respect to a reference plane.

The device may further comprise at least one drilling mask having formed therein a predefined pattern of holes, which is applicable to the porous preform in order to guide the drilling operation.

The features and advantages of the present invention will be made apparent by the following detailed description of an embodiment thereof, provided merely by way of non-limitative example and which will be conducted making reference to the annexed drawings, wherein:
Fig. 1 is a schematic representation of a device used for a chemical vapor deposition process part of a preform production method according to an embodiment of the present invention, for obtaining a glass soot body to be submitted to drilling;
Fig. 2 is an illustrative diagram showing a density (in ordinate) of the soot body after the deposition process as a function of a radial distance (in abscissa) from an axis of the soot body;
Fig. 3 schematically depicts a device for drilling holes through the soot body to obtain a holey soot body, according to an embodiment of the present invention;
Figs. 4A and 4B schematically show the holey soot body with a desired pattern of holes before and after a process of consolidation, from which a consolidated, holey soot body is obtained;
Fig. 4C is a schematic cross-sectional view of the consolidated holey soot body taken along the line IVc-IVc of Fig. 4B; and
Fig. 5 shows in extremely schematic way a preform drawing phase for drawing a holey optical fiber from the consolidated holey soot body.

Hereinafter, a method according to an embodiment of the present invention is described for producing a preform for a holey optical fiber, and for obtaining a holey fiber from the fiber preform.

Firstly, a relatively soft, porous silica soot body is provided. The silica-soot body is formed by means of a hydrolysis process; particularly, the deposition process is of the type conventionally adopted for producing preforms for drawing conventional (i.e., non-holey) optical fibers, such as Outside Vapor Deposition (OVD) or Vapor-phase Axial Deposition (VAD).

For example, the silica-soot body is formed by means of the method described in the International Application entitled "Method for producing an optical fiber preform" in the name of Pirelli Cavi E Sistemi S.p.A. and published under the number WO 02/090276 A1, which is incorporated herein by reference.

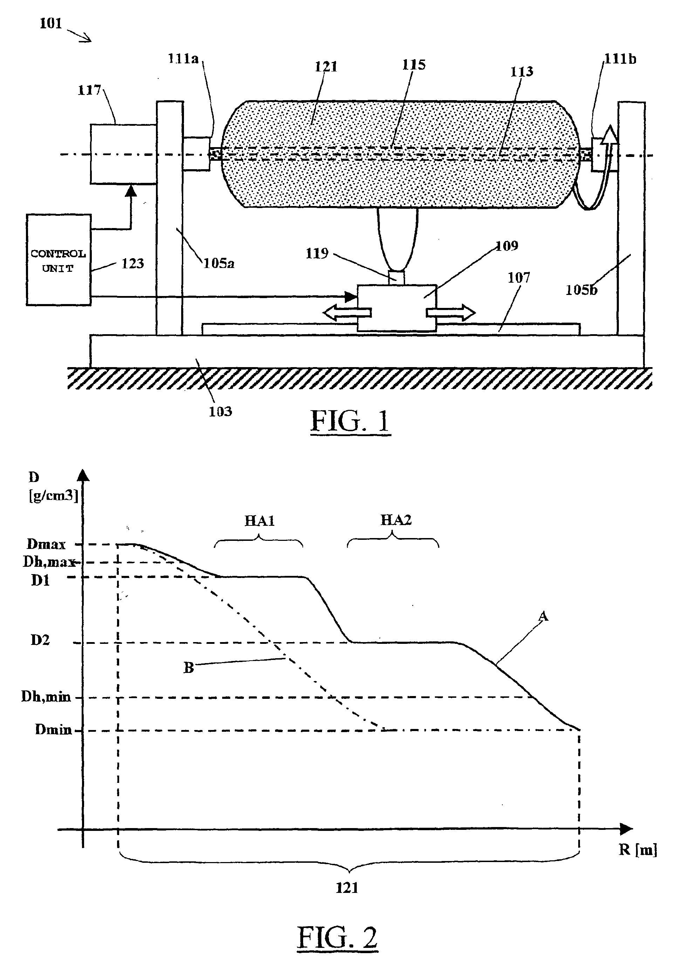

In particular, referring to Fig. 1, a device 101 for performing the chemical deposition processes basically comprises a horizontal support base 103, a pair of vertical supporting members 105a, 105b extending upwards from the base 103 at a predetermined distance from each other, a horizontal guide 107 fixed to the base 103 and extending between the two supporting members 105a, 105b, and a motorized slide 109 slidably coupled to the guide 107.

The supporting members 105a, 105b are provided on top with respective first and second handling elements 111a and 111b, facing to each other and rotatable about a same horizontal axis 113. The handling elements 111a, 111b are adapted to hold a mandrel 115 coaxial to the axis 113, and to rotate the mandrel 115 about the axis 113. An engine 117 is coupled to the first handling element 111a for causing the rotation thereof, and, consequently, of the mandrel 115 and of the second handling element 111b, about the axis 113.

The slide 109 carries a burner 119 having gas outlets on top; the burner 119 may be for example of the type described in EP 978491 in the name of Corning. The burner 119 is adapted to eject a gaseous glass raw material and a fuel gas containing oxygen and methane (or hydrogen) towards the mandrel 115, along a direction substantially perpendicular to the axis 113. The glass raw material comprises a silica precursor - typically a siloxane such as octamethylcyclotetrasiloxane (OMCTS), or a chloride such as SiC14 - and, when needed, precursors of oxides of suitable dopant species, such as germanium, phosphorus, boron, fluorine etc. When the glass raw material comprises a siloxane, it generates a highly exothermic reaction providing almost all the heat of the flame. In the flame so generated, a reaction takes place producing SiO₂ (and, if needed, oxides of dopant species such as GeO₂), which is deposited on the mandrel 115 as soot.

By sliding along the guide 107, the slide 109 moves the burner 119 horizontally beneath the mandrel 115 during the deposition process, so as to deposit silica soot on the rotating mandrel 115, thus progressively forming a porous, relatively soft soot body 121. The range of movement of the slide 5 corresponds at least to the expected length of the soot body 121, typically about 1 m. The number of times the slide is reciprocated affects the final diameter of the soot body 121 (typically, in the range between some centimeters and some tens of centimeters).

The device 101 further comprises a control unit 123 controlling the operation of the engine 117 and of the slide 109.

It is observed that an important feature of the soot body 121 is the density thereof (hereinafter shortly referred to as soot bulk density or, simply, soot density); specifically, the shape and values of the soot density profile along the radius of the soot body affect the strength of the soot body 121 and the shrinkage behavior thereof during a soot body consolidation phase that will be described hereinafter. While these aspects are important also in soot bodies intended to constitute preforms for conventional optical fibers, they are even more important in the method according to the present invention, which calls for an invasive mechanical treatment of the soot body 121. In particular, according to an embodiment of the present invention, the soot density value is preferably kept within the range from 0.25 to 0.8 g/cm³, and, even more preferably, in the narrower range from 0.5 to 0.7 g/cm³. Within these ranges of soot density values, the soot body 121 can be submitted to the intended mechanical treatment without the risk of soot cracking; in particular, as will be explained in detail in the following, it is possible to drill longitudinal holes in the soot body 121 (i.e., holes extending in the direction of the axis 113), as well as to carefully cut the soot body transversally to the axis 113. It is also observed that too high a density value, particularly a density higher than 0.9 g/cm³, would make the soot body 121 too dense for an efficient consolidation.

Normally, in a soot body intended to constitute the preform for a conventional optical fiber, the soot density has a more or less steep, but constant decrease from the inside to the outside of the soot body. According to an embodiment of the present invention, the soot density radial profile is such that the soot density remains substantially constant at least in an area wherein holes will be formed in the soot body; for example, assuming that one or more concentric circumferential successions (rings) of holes will have to be formed, a corresponding number of concentric annular areas are defined, the soot density being kept substantially constant (although, possibly, at different values) within each annular area. In this way, even after consolidation, a uniform hole geometry is guaranteed; if, preferably, the soot density is kept substantially constant at a same value throughout the whole area of formation of the holes in the soot body, the geometry of the holes remains uniform even between different rings of holes.

Soot density control can be achieved in different ways, depending on the specific equipment used for carrying out the soot body formation.

For example, referring to the exemplary device of Fig. 1, the simultaneous reciprocating translation movement of the burner 119 and rotation movement of the mandrel 115, controlled by the control unit 123 (*e.g*., according to a stored software governing the workflow) causes the chemical substances to be deposited along a helix path. By varying the translation velocity of the burner 119 and the rotation velocity of the mandrel 115 during the deposition process (while the other process parameters are preferably kept constant), a desired soot density profile can be obtained.

Just to cite another example, in JP 04367536 A2 a method of producing a soot body by means of OVD technique is described allowing to achieve a control of soot density radial change within ± 0.5%.

An exemplary, and not at all limitative soot density radial profile is schematically depicted in Fig. 2 as a solid line A, while the dash-and-dotted line B represents a typical soot density profile in a soot body intended for producing conventional optical fibers. The soot density has a starting value Dmax close to the mandrel 115 and decreases to a final value Dmin (typically 0.45 g/cm³, as low as 0.25 g/cm³ according to an embodiment of the present invention) at the outer periphery of the soot body 121. Assuming that two hole formation areas HA1 and HA2 need to be provided in the soot body 121, two corresponding annular areas of substantially constant soot density D1 and D2 are provided in the soot body 121, the values D1 and D2 being within the above-mentioned preferred density ranges.

It is observed that, instead that around the mandrel 115, the soot body 121 might be formed around a substrate constituted by a core rod preliminary obtained by means of a deposition process similar to the one described.

After the soot body 121 has been formed, it is removed from the deposition device 101, and placed in a drilling apparatus, for drilling holes longitudinally to the soot body 121.

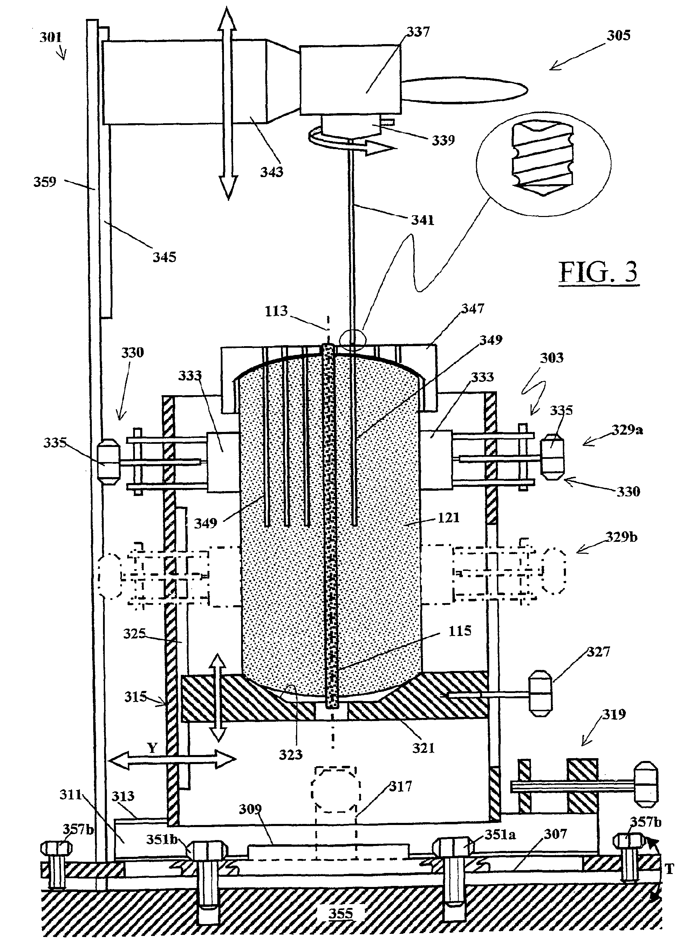

Fig. 3 schematically shows a drilling apparatus 301 according to an embodiment of the present invention. The drilling apparatus 301 essentially comprises a soot body supporting structure 303, for supporting and holding the soot body 121 during the drilling of holes, and a drill 305, for drilling holes in the soot body 121.

The soot body supporting structure 303 comprises a support base 307 provided with a first sliding guide 309 extending in a first direction (in the shown example, a direction orthogonal to the drawing sheet). A first slide 311 is slidably coupled to the sliding guide 309. The first slide 311 is provided with a second sliding guide 313, extending in a second direction, orthogonal to the first direction (in the shown example, the direction of the arrow Y). A box-shaped second slide 315 is slidably coupled to the second guide 313. A manually-operated screw-driven position adjustment system 317 (alternatively, a motorized position adjustment system) allows adjusting the position of the first slide 311 along the first guide 309; a similar screw-driven position adjustment system 319 allows adjusting the position of the second slide 315 along the second guide 313.

The support base 307 is preferably provided with a tilt mechanism, an embodiment of which is schematically represented in the drawing. A pair of screws 351a, 351b engages threaded holes in the support base 307 aligned to corresponding threaded holes in a ground plate 355 (*e.g*., at rest with respect to the ground) and act as an articulated joint between the support base 307 and the ground plate; a pair of adjustment screws 357a, 357b, engaging threaded holes formed in the support base 307 at opposite sides with respect to the screws 351a, 351b, abut against the surface of the ground plate 355. By screwing/unscrewing the screws 351a, 351b, 357a and 357b, it is possible to tilt the drilling apparatus 301 (particularly, the vertical axis thereof) with respect to the ground plate (acting as a reference plane) in the sense of the arrow T in the drawing. The tilt mechanism allows tilting the support base 307, and thus the vertical axis of the entire drilling apparatus, of a few degrees; these few degrees are sufficient for compensating slight misalignments of the soot body 121. Clearly, the tilt system can be implemented in alternative ways; for example, the two screws 351a, 351b can be replaced by a spherical joint.

The box-shaped second slide 315 extends upwards from the first slide 311 and slidably supports, in an inner space defined by lateral walls thereof, a soot body support plate 321. The soot body support plate 321 has a central seat 323 for accomodating a longitudinal end of a soot body 121 (and the projecting end of the mandrel 115). The support plate 321 is vertically slidable along a guide 325, and can be blocked at a desired height by means of a screw 327.

In order to keep the soot body 121 stable during the drilling operation, one or more sets of soot body holders 329a, 329b may be provided, located at prescribed heights. Each set of soot body holders preferably includes at least two or, preferably, three holders 330, preferably regularly spaced (*e.g*., positioned at 120° from each other). Each holder comprises a soot body contact pad 333, driven by a screw 335 (although other drive mechanisms, *e.g*. motorized drive mechanisms, are suitable). In order not to damage the soot body 121, which is fragile and easy to be contaminated, the contact pads 333 are made of, or at least an active surface thereof intended to contact the soot body is covered with a layer of, a suitable elastomeric material such as rubber, particularly a silicon rubber. The contact pads 333 can thus be tightened against the soot body 121 so as to firmly keep it vertically straight without causing contamination and crackings.

A vertical wall 359 extends upwards from the ground plate 355 to provide a support for the drill 305. The drill 305 conventionally comprises a motor group 337 driving in rotation a drill mandrel 339 interchangeably supporting a drilling bit 341. The motor group 337 is mounted onto a slide 343 vertically slidable along a guide 345 on the slide 315.

The drilling bit can for example be of the twist type (as depicted schematically in the enlarged detail of Figure 3) or of the tube type; both of these types of drilling bit are commercially available in different diameters and with lengths of up to several tens of cm.

In a preferred embodiment of the invention, a drilling mask 347, for example made of plastic, is provided having formed therein a desired pattern of holes, corresponding to the pattern of holes to be drilled in the soot body 121. The drilling mask 347 is adapted to be placed on top of the soot body 121, and thus provides a guidance for a drill operator while drilling the holes, ensuring in particular a better control of the straightness of the holes being drilled.

In operation, the soot body 121 is removed from the deposition device 101, and it is placed in upstanding position in the drilling apparatus 301, with a bottom end of the soot body 121 accomodated in the seat 323 of the support plate 321. If necessary, the height of the soot body 121 is adjusted by adjusting the height of the support plate 321, so as to place the top end of the soot body 121 at a desired height, particularly with respect to the soot body holders 329a (and 329b, if provided). Then, the soot body holders 329a (and 329b, if present) are tightened until the contact pads 333 exert a pressure against the soot body 121 sufficient to guarantee that the soot body 121 stays straight and still during the drilling operation. The drilling apparatus tilt mechanism allows for compensating slight misalignments of the soot body longitudinal axis due to the fact that the different soot body holders are not identically tightened.

If provided, the drilling mask 347 is then placed on top of the soot body 121.

By acting on the position adjustment systems 317 and 319, the position of the soot body 121 in a horizontal plane is varied, so as to properly position the soot body top end with respect to the drilling bit 341; in particular, a hole in the drilling mask 347 is positioned under the drilling bit 341.

The drill 305 is then turned on and lowered onto the soot body, so as to start drilling the first hole 349. When the first hole has been drilled and the drill 305 is raised, the position of the soot body is varied so as to bring another hole in the drilling mask under the drill bit. The operations described above are repeated until all the holes have been drilled.

Preferably, when relatively long holes 349 are to be drilled in the soot body 121, two or more drilling bits of increasing length are exploited for drilling each hole; for example, a relatively short drilling bit is used to start drilling the hole, so as to drill a hole of, *e.g*., few centimeters; then, the drilling bit is substituted by a longer bit for completing the hole drilling. This ensures a better control of the hole straightness.

The drilling bit rotation speed needs not be very high; for example, a rotation speed of few thousands rpms, particularly less than 2000 rpms, is suitable.

If desired, the drilling operation can be assisted by a gas coolant such as liquid nitrogen and the like; water-based and other liquid coolants are better avoided, not to cause contamination.

Expediently, when more than one hole need to be drilled, a bed of drilling bits can be realized, and the drilling bits may already be arranged so as to reproduce the pattern of holes to be formed in the soot body, or an elemental portion thereof that, properly replicated, provides the desired pattern of holes.

It is observed that although in the shown example the drilling apparatus is designed to keep the soot body aligned to the vertical direction, this is not at all limitative to the present invention, since the soot body could as well be kept in any other orientation during the drilling.

According to an alternative embodiment of the present invention, the drilling apparatus may be a Computer Numerically Controlled (CNC) drilling machine, so as to guarantee high precision and speed.

Thanks to the relatively high softness of the soot body 121, the drilling of holes is a fast and easy operation, which allows forming holes that, albeit rather long, are very straight; for example, the Applicant has succeeded in drilling holes 30 cm long and with a diameter of 4 mm within a tolerance range in terms of straightness of less than ± 0.5 mm. The Applicant has also verified that the quality of the holes that are formed is good also in terms of roundness and surface smoothness. Additionally, close-packed arrangements of holes are rather easily obtained (for example, the different holes can be as close as 1 mm).

It is observed that in case the available drilling bits are not sufficiently long to enable drilling the whole length of the soot body 121, it is possible to drill holes into the soot body 121 from both the ends thereof. Although slight misalignments between the holes drilled from the two opposite sides may in this case arise, this is normally not a problem, because from a same soot body two or more optical fiber sections are normally drawn.

After the desired pattern of holes has been drilled thereinto, the soot body 121 is removed from the drilling apparatus 301.

The soot body 121 is then submitted to a purification, dehydration and consolidation process, similar to the process that, in the manufacturing of conventional optical fibers, follows the phase of soot body formation. For example, the purification, dehydration and consolidation process is carried out following the drying and sintering method described in US 5,656,057, which is incorporated herein by reference.

In particular, the soot body 121 undergoes a thermal treatment while being submitted to a flux of chlorine, oxygen and helium.

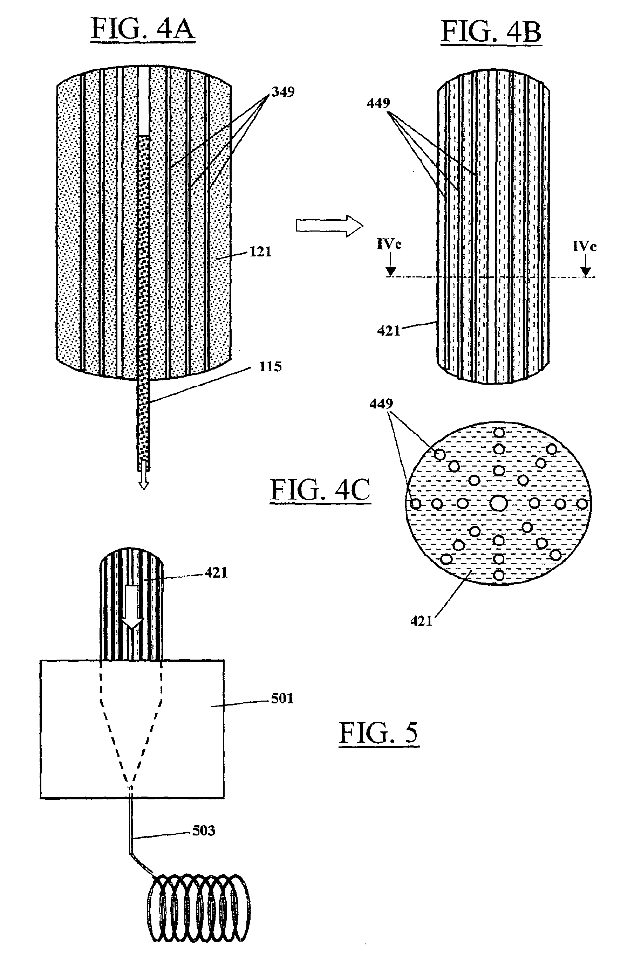

As a result, as schematically shown in Figs. 4A, 4B and 4C, a highly pure, consolidated, holey glass preform 421 with a low content of OH is obtained from the soot body 121.

The preform 421 has a symmetrical distribution of holes 449 (positioned on concentric rings), having a diameter preferably comprised between 1 mm and 12 mm.

During the consolidation, the soot body 121 undergoes a significant densification, with a consequent volume shrinkage; typically, the final average density of the consolidated glass preform is about four times higher than the starting average density of the soot body 121. As mentioned in the foregoing, the soot body density value and radial profile play an important role also in the consolidation process; in particular, the soot density value determines the hole shrinkage ratio, while the soot density radial profile affects the hole distribution geometry and uniformity after consolidation: in order to ensure that a desired uniform hole geometry in each ring of holes and between the rings is maintained even after consolidation, the soot density variation along the radial direction should be constant at least in the area wherein the holes are formed.

The Applicant also observes that the densification is not uniform throughout the soot body 121: not only the degree of densification is lower where the soot density is higher, but, due to the rigidity of the mandrel 115, the degree of densification is substantially lower at the center of the soot body than near the outer periphery thereof (the presence of the mandrel 115 in some way opposes to the densification of the soot material near the mandrel); this might cause deformation of the hole geometry. Thus, it may be preferable to slip the mandrel 115 off the soot body 121 before the step of consolidation, so that the densification of the central portion of the soot body is no more hindered.

Then, after the consolidated glass preform 421 has been obtained, a preform drawing process is carried out, as in the manufacturing of conventional fibers. Referring to the extremely schematic representation provided in Fig. 5, the consolidated glass preform 421 is fed to a drawing furnace 501, and an optical fiber 503 of much smaller diameter is pulled down therefrom and collected on an appropriate reel. During the drawing, the diameter of the holes 449 is greatly reduced, down to prefixed values, but the pattern of holes present in the preform 421 is maintained in the optical fiber 503. The diameter of the holes in the final fiber is preferably comprised between 0.3 µm and 15 µm.

Before being submitted to drawing, the preform 421 may be submitted to a process of elongation or to a process of overcladding, for properly varying the diameter thereof.

The method according to the present invention combines the advantages of the well-established "soot" processes, widely adopted in the manufacturing of conventional optical fibers, which already allows the mass production of low-loss optical fibers, with a high degree of freedom in the design of the hole patterns.

In the method according to the present invention the holes are formed rather easily, both because the soot body is relatively soft, and because the holes, being drilled into the soot body before the consolidation and drawing processes, are macroscopic, having diameters of the order of some millimeters.

Although the present invention has been disclosed and described by way of an embodiment, it is apparent to those skilled in the art that several modifications to the described embodiment, as well as other embodiments of the present invention are possible without departing from the scope thereof as defined in the appended claims.

For example, any other technique of mechanical drilling known in the art, such as the ultrasonic drilling, may be used as well.

If ultrasonic drilling is used, cooling of the preform should preferably be performed by means of an inert gas, since water would contaminate the preform structure in an irreparable way, thus affecting the fiber performances.

Although the technique of the present invention is preferably applied to soot preforms realized by flame hydrolysis, which is the most suitable technique for industrial production, it may as well be applied to any other kind of porous preform apt to be transformed into a transparent glass preform, such as the gel porous preform obtained in an intermediate step of the method described in US 4,680,046.

## Claims

1. A method of producing a holey optical fiber preform, comprising:
forming a porous preform (121) having a longitudinal direction (113); and
forming a pattern of holes (349) extending through the porous preform along the longitudinal direction, wherein said holes are formed by drilling (305) the porous preform before consolidation thereof.

2. The method according to claim 1, in which the density of the porous preform in a region thereof wherein the at least one hole is to be formed has a maximum variation of ± 2 %.

3. The method according to claim 1, further comprising submitting the porous preform to a consolidation process after said drilling.

4. The method according to claim 3, further comprising submitting the porous preform to a dehydration process after said drilling.

5. The method according to claim 1, in which said porous preform is a soot preform formed by means of flame hydrolysis, particularly a glass soot preform.

6. The method according to claim 1, in which said glass soot preform is formed by means of an Outside Vapor Deposition (OVD) process or a Vapor Axial Deposition (VAD) process.

7. The method according to claim 1, in which said glass soot preform has a density (D) in a range from 0.25 to 0.8 g/cm³.

8. The method according to claim 7, in which the density of the glass soot preform is in a range from 0.5 to 0.7 g/cm³.

9. The method according to claim 1, in which the porous preform is a gel preform.

10. A method of producing a holey optical fiber having at least one hole extending through a fiber longitudinal direction, comprising:
forming a holey optical fiber preform by means of the method according to any one of the preceding claims, and
drawing the holey optical fiber preform.

11. A device (301) for drilling holes (339) in a porous preform (121), comprising:
a porous preform supporting structure (303), comprising an arrangement of porous preform holders (329a,329b) adapted to engage an outer surface of the porous preform for keeping the porous preform steady, and
a drill (305) for actuating at least one drilling bit (341), and
a position adjustment structure (309,319,313,317,325,321,327) for adjusting a relative position of the porous preform and the drill.

12. The device according to claim 11, in which the porous preform holders have a surface intended for contacting the porous preform, said surface being made of an elastomeric material, particularly rubber, even more particularly silicon rubber.

13. The device according to claim 11, comprising a tilt mechanism (315a,351b,357a,357b) adapted to tilting an axis of the porous preform supporting structure with respect to a reference plane (355).

14. The device according to claim 11, further comprising at least one drilling mask (347), having formed therein a respective predefined pattern of holes, said mask being associatable with the porous preform for guiding the drilling of holes.

## Patentansprüche

1. Verfahren zur Herstellung einer Loch-Lichtleitfaser-Vorform, das Verfahren beinhaltend:
Ausbilden einer porösen Vorform (121), die eine Längsrichtung (113) aufweist; und
Ausbilden eines Musters von Löchern (349), die sich durch die poröse Vorform entlang der Längsrichtung erstrecken, wobei die Löcher durch Bohren (305) der porösen Vorform vor deren Verfestigung ausgebildet werden.

2. Verfahren nach Anspruch 1, bei dem die Dichte der porösen Vorform in einem Gebiet von dieser, in dem das mindestens eine Loch ausgebildet werden soll, eine maximale Schwankung von ± 2 % aufweist.

3. Verfahren nach Anspruch 1, das weiter beinhaltet, dass die poröse Vorform nach dem Bohren einem Verfestigungsprozess unterzogen wird.

4. Verfahren nach Anspruch 3, das weiter beinhaltet, dass die poröse Vorform nach dem Bohren einem Dehydratisierungsprozess unterzogen wird.

5. Verfahren nach Anspruch 1, bei dem die poröse Vorform eine Ruß-Vorform ist, die mittels Flammenhydrolyse erzeugt wird, insbesondere eine Glasruß-Vorform.

6. Verfahren nach Anspruch 1, bei dem die Glasruß-Vorform mittels eines Außen-Gasphasenabscheidungsprozesses (OVD) oder eines Axial-Gasphasenabscheidungsprozesses (VAD) erzeugt wird.

7. Verfahren nach Anspruch 1, bei dem die Glasruß-Vorform eine Dichte (D) im Bereich von 0,25 bis 0,8 g/cm³ aufweist.

8. Verfahren nach Anspruch 7, bei dem die Dichte der Glasruß-Vorform im Bereich von 0,5 bis 0,7 g/cm³ liegt.

9. Verfahren nach Anspruch 1, bei dem die poröse Vorform eine Gel-Vorform ist.

10. Verfahren zur Herstellung einer Loch-Lichtleitfaser, die mindestens ein Loch aufweist, das sich durch eine Faserlängsrichtung erstreckt, das Verfahren aufweisend:
Erzeugen einer Loch-Lichtleitfaser-Vorform mittels des Verfahrens nach einem der vorhergehenden Ansprüche, und
Ziehen der Loch-Lichtleitfaser-Vorform.

11. Vorrichtung (301) zum Bohren von Löchern (339) in eine poröse Vorform (121), aufweisend:
eine Tragstruktur (303) für eine poröse Vorform, aufweisend eine Anordnung von Halteeinrichtungen (329a, 329b) für die poröse Vorform, die ausgebildet sind, um mit einer Außenfläche der porösen Vorform in Kontakt zu kommen, um die poröse Vorform unbeweglich zu halten, und
eine Bohreinrichtung (305) zum Betätigen mindestens einen Bohreinsatzes (341), und
eine Positionseinstellstruktur (309, 319, 313, 317, 325, 321, 327) zum Einstellen einer Relativposition der porösen Vorform und der Bohreinrichtung.

12. Vorrichtung nach Anspruch 11, bei der die Halteeinrichtungen für die poröse Vorform eine Fläche aufweisen, die mit der porösen Vorform in Kontakt kommen soll, wobei die Fläche aus einem Elastomermaterial, insbesondere Gummi, und noch spezieller Silikonkautschuk, hergestellt ist.

13. Vorrichtung nach Anspruch 11, die einen Kippmechanismus (315a, 351b, 357a, 357b) aufweist, der ausgebildet ist, um eine Achse der Tragstruktur für die poröse Vorform bezüglich einer Referenzebene (355) zu kippen.

14. Vorrichtung nach Anspruch 11, die weiter mindestens eine Bohrmaske (347) aufweist, in welcher ein jeweiliges vordefiniertes Muster von Löchern ausgebildet ist, wobei die Maske mit der porösen Vorform für ein Führen des Bohrens von Löchern in Beziehung gesetzt werden kann.

## Revendications

1. Procédé de production de préforme de fibre optique à trous, lequel procédé comporte :
- le fait de former une préforme poreuse (121) dotée d'une direction longitudinale (113) ;
- et le fait de former un réseau de trous (349) qui s'étendent à travers la préforme poreuse dans sa direction longitudinale, ces trous étant formés par perçage (305) de la préforme poreuse avant la consolidation de celle-ci.

2. Procédé conforme à la revendication 1, dans lequel la masse volumique de la préforme poreuse, dans une région de celle-ci où seront percés des trous, varie d'au maximum ± 2 %.

3. Procédé conforme à la revendication 1, qui comporte en outre le fait de soumettre la préforme poreuse, après ledit perçage, à une opération de consolidation.

4. Procédé conforme à la revendication 3, qui comporte en outre le fait de soumettre la préforme poreuse, après ledit perçage, à une opération de déshydratation.

5. Procédé conforme à la revendication 1, dans lequel ladite préforme est une préforme de suie formée par hydrolyse à la flamme, en particulier une préforme de suie de verre.

6. Procédé conforme à la revendication 5, pour lequel ladite préforme de suie de verre a été formée par un procédé OVD (dépôt à partir d'une phase vapeur extérieure) ou VAD (dépôt axial à partir d'une phase vapeur).

7. Procédé conforme à la revendication 5, dans lequel ladite préforme de suie de verre présente une masse volumique D valant de 0,25 à 0,8 g/cm³.

8. Procédé conforme à la revendication 7, dans lequel la masse volumique de la préforme de suie de verre vaut de 0,5 à 0,7 g/cm³.

9. Procédé conforme à la revendication 1, dans lequel la préforme poreuse est un préforme de gel.

10. Procédé de production d'une fibre optique à trous, percée d'au moins un trou qui s'étend dans une direction longitudinale de la fibre, lequel procédé comporte :
- le fait de former une préforme de fibre optique à trous, selon un procédé conforme à l'une des revendications précédentes ;
- et le fait de tirer la préforme de fibre optique à trous.

11. Dispositif (301) servant à percer des trous (339) dans une préforme poreuse (121), lequel dispositif comprend :
- une structure (303) supportant la préforme poreuse, qui comprend une série de soutiens (329a, 329b) de préforme poreuse, adaptés pour agir sur la surface extérieure de la préforme poreuse de manière à maintenir celle-ci en place ;
- une foreuse (305) permettant d'actionner au moins un foret (341) ;
- et une structure d'ajustement de position (309, 319, 313, 317, 325, 321, 327) permettant d'ajuster les positions relatives de la préforme poreuse et de la foreuse.

12. Dispositif conforme à la revendication 11, dans lequel les soutiens de préforme poreuse présentent une surface destinée à entrer en contact avec la préforme poreuse, laquelle surface est faite d'un matériau élastomère, en particulier d'un caoutchouc, et plus particulièrement d'un caoutchouc de silicone.

13. Dispositif conforme à la revendication 11, qui comporte un mécanisme d'inclinaison (351a, 351b, 357a, 357b), adapté pour incliner l'axe de la structure supportant la préforme poreuse par rapport à un plan de référence (355).

14. Dispositif conforme à la revendication 11, qui comporte en outre un masque de forage (347) dans lequel a été pratiqué un réseau pré-défini de trous, lequel masque peut être monté sur la préforme poreuse de manière à guider le forage des trous.
